# EUROPEAN PATENT APPLICATION

(11) **EP 2 980 952 A1**
(43) Date of publication of application: **03.02.2016**
(21) Application number: 13880344.0
(22) Date of filing: 28.03.2013
(51) Int. Cl.: H02J 7/00, H02J 9/06

(54) **POWER SUPPLY CONTROL DEVICE**

(71) Applicant: The Chugoku Electric Power Co., Inc., Hiroshima-shi, Hiroshima 730-8701 (JP)
(72) Inventor: KOUNO, Nobuyuki, Hiroshima-shi Hiroshima 730-8701 (JP); OKUBO, Norihiro, Hiroshima-shi Hiroshima 730-8701 (JP); NAITO, Masaki, Hiroshima-shi Hiroshima 730-8701 (JP); UMAKOSHI, Yuji, Hiroshima-shi Hiroshima 730-0855 (JP); FUJII, Seiichiro, Hiroshima-shi Hiroshima 730-0855 (JP)
(74) Representative: Portch, Daniel
(86) International application number: PCT/JP2013/059365
(87) International publication number: WO 2014/155625

(57) **Abstract**

[Problem] To prevent a more than necessary limitation on the power supplied to a load at a power outage and the like due to a priority assigned the loads.

[Solution] When a user turns on an on-off switch (16) so that a power supply device (3) is connected to a trunk line (12) in a switchboard (4) after a power source breaker (14) is opened in response to the detection of power outage, a personal computer (PC) (5) identifies from among loads (L1 - L8) a load to which power can be supplied within the range of output capacity of the power source supply device (3) and connects the load identified to the trunk line (12). A user can assign priorities to some or all of the loads (L1 - L8). Although the PC (5) identifies the loads to be connected in order of the priority, when a total power consumption of the identified loads exceeds the limit of output capacity of the power supply device (3), the PC (5) skips the load to be identified in order of the priority and attempts to identify a load with a lower priority. The PC (5) identifies the loads for which a priority is not set in ascending order of power consumption.

## Description

### [Technical Field]

The present invention relates to a power supply control device which controls power supplied from a power source device to each load.

### [Background Art]

Recently, there has become widely used a system which supplies power to loads with a power source device where consumers utilize a power source device such as, for example, a rechargeable battery of an electric vehicle, a power generator and the like when power supply from the power system stops due to power outage and the like.

According to such a system, the amount of electric power which can be obtained from the power source device is small compared to the amount of electric power which can be obtained from the power system so that although electric power sufficient for operating all the loads had been obtained from the power system before a power outage, electric power sufficient for operating all the loads may not be able to be obtained from the power source device after a power outage has occurred.

There is known a technology which takes the above into consideration and limits the loads to be supplied the power from the power source device during a power outage. For example the power supply system disclosed in PTL 1 divides the plurality of loads held by the residences into load group LA and load group LB and supplies power from the battery to only the load group LB during a power outage. Further, this power supply system prioritizes the plurality of loads included in the load group LB, and estimates the amount of power remaining based on the remaining battery capacity and the estimated power consumption of each load so to thereby supply power to only the loads with high priority when the amount of power remaining is small.

Further the control system disclosed in PTL 2 sets the generating units as the target from which power is to be supplied in a descending order of priority of the electricity loads when the output of the generating unit is lower than the estimated power demand, and selects the power loads such that the total estimated power demand does not exceed the total output of the generating units and the like.

### [Citation List]

### [Patent Literature]

[PTL 1]
   Japanese Patent Application Laid-open Publication No. 2007-236023
[PTL 2]
   Japanese Patent Application Laid-open Publication No. 2008-11612

### [Summary of Invention]

### [Technical Problem]

However, the above described technology of limiting the load to be supplied power from the power source device during a power outage simply identifies according to priority the loads to be supplied power from the power source device during a power outage. Therefore, there is a possibility that a load because of having low priority is not identified as a load to be supplied power from the power source device even when the load can be supplied power from the power source device.

For example, assume that there were loads M1, M2, M3 and M4 in this order of priority and the power consumption by load M3 is greater than that of M4. And assuming a case when power is supplied from the power source device to the loads M1 to M4 during a power outage, the load M1 is firstly identified as the load to be supplied power and then the load M2 is identified as the load to be supplied power according to priority, but the capacity of the power which can be supplied by the power source device is not sufficient when the load M3 is identified as the load to be supplied power so that load M3 is not identified as a load to be supplied power. In such a case, the load M4 of a lower priority than the load M3 would not be identified as a load to be supplied power since the process of identifying the loads would end when load M3 is not identified as the load to be supplied power. However, there may be a case where there is power remaining in the power source device enough for supplying power to the load M4 of a small power consumption even if there were not enough power remaining for supplying to the load M3 of a large power consumption. And in this case, even if there is a load which can be supplied power exists, power supply to such load would not be realized.

Further, according to the above described technology, in a case loads which have assigned priority and loads which do not have assigned priority exist, the process of identifying the loads to be supplied power from the power source device would be performed to only the loads which are assigned priority and not to the load which are not assigned priority.

Therefore, even when there is power remaining in the power source device after the process of identifying the loads to be supplied power from the power source device is performed to the loads having priority assigned, power would not be supplied to some of the loads which are not assigned priority even though there is potential power for such.

As described above, the above conventional technology has a problem of limiting beyond necessity the power supply to the loads at a power outage, due to the priorities assigned to the loads.

The present invention has been made in view of such background and an object thereof is to provide a power supply control device which can prevent the power supply to the loads, when the power system stops such as by a power outage and the like, from being limited beyond necessity due to the priority assigned to the loads.

### [Solution to Problem]

In order to solve the above described problem, the first power supply control device of the present invention is a power supply control device that controls power supply from a power source device to a plurality of loads including, a circuit configured to parallely connect the plurality of loads to the power source device, a plurality of switches provided to the circuit, the switches being configured to respectively switch between a connection and a shut off between the power source device and the plurality of loads, a priority setting unit configured to assign priorities to the plurality of loads, a load identifying unit configured to repeatedly perform a load identifying process on all of the plurality of loads, the load identifying process selecting one load from the plurality of loads according to the priority, identifying the selected load as a connection target when a total power consumption by the selected load and a load that is already identified as a connection target is not greater than an upper output limit that is set according to an output capacity of the power source device, and does not identify the selected load as the connection target when the total power consumption by the selected load and the load that is already identified as the connection target is greater than the upper output limit, and a changeover control unit configured to control a changeover of the switch corresponding to the load that is identified as the connection target by the load identifying unit and to connect to the power source device the load that is identified as the connection target.

Additionally, in the second power supply control device of the present invention, the aforementioned first power supply control device of the present invention is characterized to further include a measuring unit configured to measure the power consumption by the loads and a storage unit configured to store measurements, of the power consumption by the loads, measured by the measuring unit wherein the load identifying unit calculates the total power consumption using the measurements, of the power consumption by the loads, measured by the measuring unit and stored in the storage unit.

Additionally, in the third power supply control device of the present invention, the aforementioned first or second power supply control device of the present invention is characterized to further include a power source changeover unit configured to switch between connecting the loads to a power system and connecting the loads to the power source device and the load identifying unit performs the load identifying process when the loads are shut off from the power system and are connected to the power source device by the power source changeover unit.

Additionally, the fourth power supply control device of the present invention is a power supply control device that controls power supply from a power source device to a plurality of loads including a circuit configured to parallely connect the plurality of loads to the power source device, a plurality of switches provided to the circuit, the switches being configured to respectively switch between a connection and a shut off between the power source device and the plurality of loads, a priority setting unit configured to set as prioritized loads to a number of loads of the plurality of loads, set as non-prioritized loads to a remainder of the plurality of loads and assign priorities to only the prioritized loads, a prioritized load identifying unit configured to repeatedly perform a prioritized load identifying process on all prioritized loads, the prioritized load identifying process selecting one prioritized load according to the priority, identifying the selected prioritized load as a connection target when a total power consumption by the selected prioritized load and a prioritized load that is already identified as a connection target is not greater than an upper output limit that is set according to an output capacity of the power source device, and does not identify the selected prioritized load as the connection target when the total power consumption by the selected prioritized load and the prioritized load that is already identified as the connection target is greater than the upper output limit, a non-prioritized load identifying unit configured to repeatedly perform a non-prioritized load identifying process as long as the total power consumption of the selected non-prioritized load and the load that is already identified as the connection target is not greater than the upper output limit, after performing by the prioritized load identifying unit the prioritized load identifying process on all the prioritized loads, the non-prioritized load identifying process selecting one non-prioritized load in ascending order of power consumption and identifying the selected non-prioritized load as the connection target; and a changeover control unit configured to control a changeover of the switch corresponding to the loads that are identified as the connection targets by the prioritized load identifying unit and the non-prioritized load identifying unit, and to connect to the power source device the loads that are identified as the connection targets.

Additionally, in the fifth power supply control device of the present invention, the aforementioned fourth power supply control device of the present invention is characterized to further include a measuring unit configured to measure the power consumption by the loads and a storage unit configured to store measurements, of the power consumption by the loads, measured by the measuring unit wherein the prioritized load identifying unit and the non-prioritized load identifying unit calculate the total power consumption using the measurements, of the power consumption by the loads, measured by the measuring unit and stored in the storage unit.

Additionally, in the sixth power supply control device of the present invention, the aforementioned fourth or fifth power supply control device of the present invention is characterized to further include a power source changeover unit configured to switch between connecting the loads to a power system and connecting the loads to the power source device and the prioritized load identifying unit and the non-prioritized load identifying unit perform the prioritized load identifying process and the non-prioritized load identifying process when the loads are shut off from the power system and are connected to the power source device by the power source changeover unit.

### [Advantageous Effects of Invention]

According to the present invention, power supply, to the loads when the power system stops, being limited beyond necessity due to the priority assigned to the loads can be prevented.

### [Brief Description of Drawings]

[Fig. 1] Fig. 1 is an explanatory diagram illustrating a power supply control device together with a power source supply device according to an embodiment of the present invention.
[Fig. 2] Fig. 2 is an explanatory diagram illustrating an example of the load management tables in the power supply control device according to an embodiment of the present invention.
[Fig. 3] Fig. 3 is an explanatory diagram illustrating another example of the load management tables in the power supply control device according to an embodiment of the present invention.
[Fig. 4] Fig. 4 is a flow chart illustrating the load identifying process in the power supply control device according to an embodiment of the present invention.
[Fig. 5] Fig. 5 is a flow chart which continues from Fig. 4.

### [Description of Embodiments]

Description of an embodiment of the present invention will be given in the following with reference to the drawings attached.

### (Power Supply Control Device)

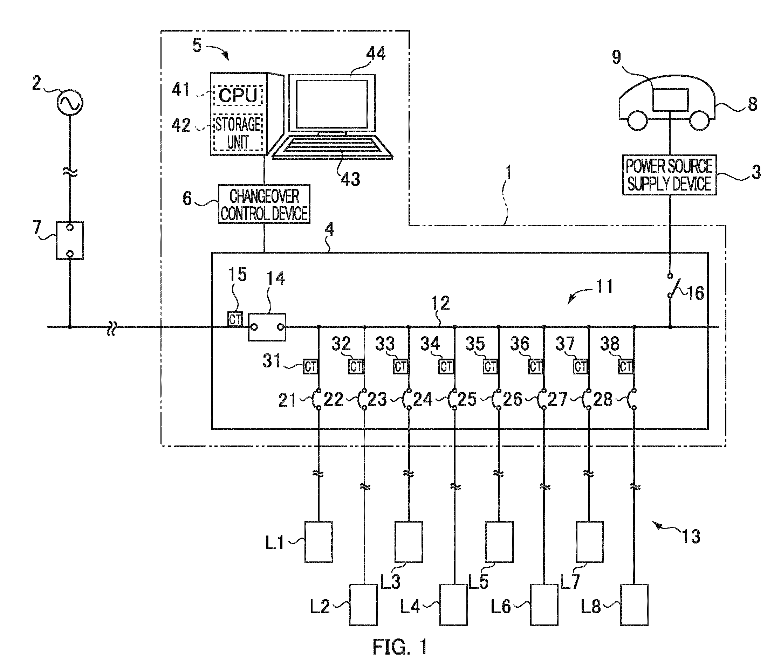

Fig. 1 illustrates a power supply control device and the like according to an embodiment of the present invention. In Fig. 1, the power supply control device 1 according to the embodiment of the present invention is a device that controls the power supply from the power source supply device 3 as the power source device to the loads L1 to L8 when power supply from the power system 2 to the loads L1 to L8 stops due to a power outage. The power supply control device 1 in the present embodiment is provided to the consumers to control the power supplied to the loads L1 to L8 of the consumers.

The power supply control device 1 includes a switchboard 4, a personal computer (hereinafter called "PC") 5 and a changeover control device 6.

The switchboard 4 has the power system 2 connected thereto via an external circuit breaker 7 and the like. Additionally, the switchboard 4 has connected thereto the power source supply device 3. The power source supply device 3 is, for example, a device which takes out the power stored in the rechargeable battery 9 of the electric vehicle 8 to supply to the switchboard 4 side.

Further, the switchboard 4 has connected thereto a plurality (e.g., eight) loads L1 to L8. The loads L1 to L8 include, for example, electrical equipment such as illuminations, fire alarms, refrigerators, air conditioners, television devices and the like.

An electric circuit 11 is formed in the switchboard 4, for selectively supplying power from the power system 2 and the power from the power source supply device 3 to each of the loads L1 to L8. The electric circuit 11 includes a trunk line 12 and the trunk line 12 has connected thereto the external circuit breaker 7 connected to the power system 2 and the power source supply device 3 in parallel to each other. Further, the trunk line 12 has a branch circuit unit 13 connected thereto.

The branch circuit unit 13 includes a plurality of lines for connecting to each of the plurality of the loads L1 to L8 to the trunk line 12, and the loads L1 to L8 are each connected in parallel to the trunk line 12 via these lines.

Further, in the branch circuit unit 13, a load switch 21 which performs changeover between a connection and a shut off between the load L1 and the trunk line 12 is connected midway the line connecting the load L1 and the trunk line 12. The load switch 21 is, for example, a line breaker. And the line connecting the load L1 and the trunk line 12 has connected thereto a current transformer (CT) 31 which measures the current flowing into the load L1 through this line. Similarly, the lines connecting each of the loads L2 to L8 to the trunk line 12 also respectively have load switches 22 to 28 and current transformers 32 to 38 connected thereto. Here, each of the current transformers 31 to 38 is a specific example of the measuring unit.

Additionally, the switchboard 4 has provided therein a power source breaker 14 which performs the changeover between the connection and shut off between the power system 2 and the trunk line 12. The power source breaker 14 is, for example, a line breaker which has attached a UVT (undervoltage release). The power source breaker 14 is usually (during operation of the power system) closed to have the power system 2 and the trunk line 12 connected, however, when the power supply from the power system 2 stops due to a power outage, the power source breaker 14 detects such event to be opened automatically and shuts off the line between the power system 2 and the trunk line 12. Further, the switchboard 4 has connected therein a current transformer 15 which measures the current flowing from the power system 2 into the trunk line 12.

An on-off switch 16 which performs a changeover between a connection and a shut off between the power source supply device 3 and the trunk line 12 is provided in the switchboard 4. The on-off switch 16 is, for example, a manual changeover switch. The on-off switch 16 is usually opened to shut off the line between the power source supply device 3 and the trunk line 12. A user can manually close the on-off switch 16 to connect the line between the power source supply device 3 and the trunk line 12. Here the on-off switch 16 together with the power source breaker 14 are specific examples of the power source changeover unit.

The changeover control device 6 is a device that controls the switchboard 4 together with the PC 5, and has provided such as an interface circuit and a control circuit inside. The changeover control device 6 has connected thereto the PC 5, the current transformer 15, the power source breaker 14, the on-off switch 16, the current transformers 31 to 38 and the load switches 21 to 28. The changeover control device 6 receives from the current transformer 15 and the current transformers 31 to 38 the values of the currents measured by each of the current transformer 15 and the current transformers 31 to 38, and outputs them to the PC 5. Further the changeover control device 6 receives a trip signal outputted from the power source breaker 14 and outputs to the PC 5 a notification signal corresponding to the trip signal received. Furthermore, the changeover control device 6 detects the on or the off of the on-off switch 16 and outputs to the PC 5 a detection signal corresponding to the detection result. Even furthermore, the changeover control device 6 receives an instruction signal outputted from the PC 5 and outputs a control signal corresponding to the received instruction signal to the load switch, among the load switches 21 to 28, specified by the instruction signal. This load switch opens or closes according to the control signal. Here, the changeover control device 6 as well as the PC 5 is specific examples of the changeover control unit.

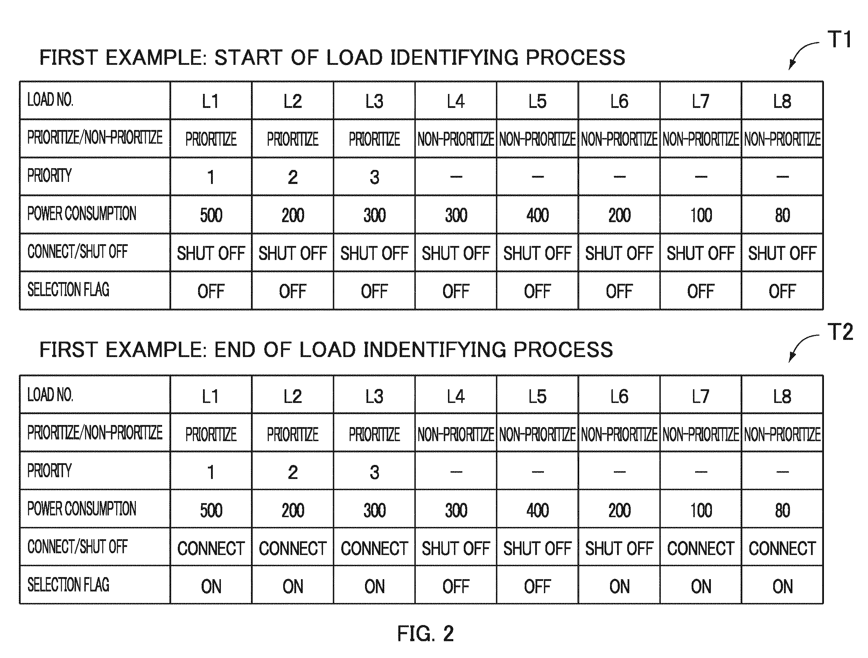

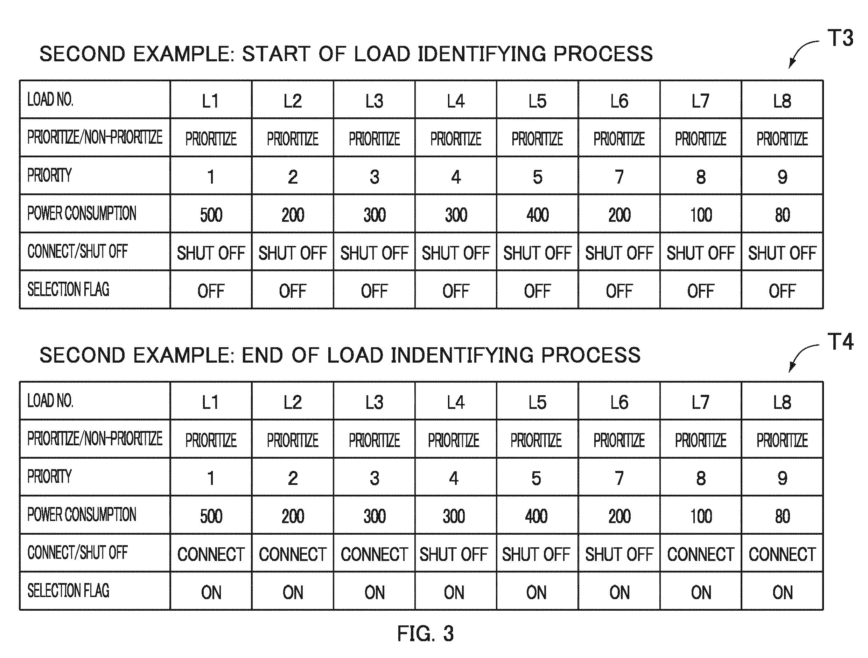

The PC 5 includes a CPU (central processing unit) 41 and a storage unit 42. Additionally, the PC 5 includes an operation input unit 43 having a keyboard, a pointing device and the like, and a information display unit 44 having a display device and the like. Further, the PC 5 has an interface (not shown) and the like for performing transmission/reception of information from the changeover control device 6. The CPU 41 performs according to a computer program which is installed in the PC 5 in advance, (a) a priority setting process, (b) a power consumption calculation process and (c) a connection load identifying process as to be described later. The storage unit 42 is a storage device such as, for example, a hard disc drive device and a flash memory. The storage unit 42 has stored therein load management tables (see Fig. 2 or 3). Here, the PC 5 is a specific example of the priority setting unit, the load identifying unit, the prioritized load identifying unit and the non-prioritized load identifying unit.

### (Load Management Table)

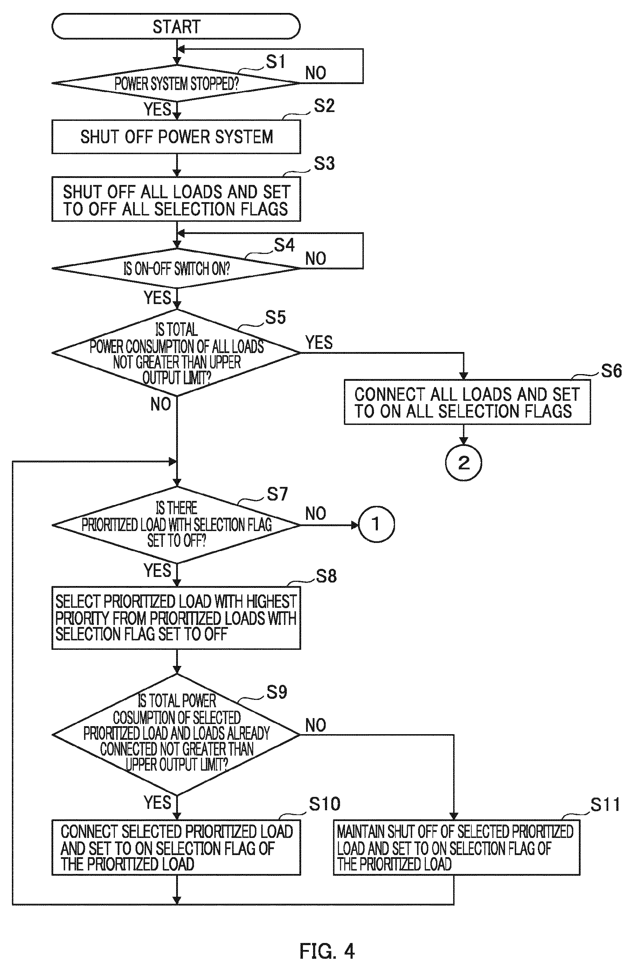

The upper table in Fig. 2 indicates an example of the load management table. In Fig. 2, the load management table T1 is a table indicating the management conditions of each of the loads L1 to L8. In the load management table T1, the "LOAD NO." row indicates information for identifying each of the loads L1 to L8. The "PRIORITIZE/NON-PRIORITIZE" row indicates information on whether each of the loads L1 to L8 are loads having set priority or loads that do not have set priority. The "PRIORITY" row indicates information on priority of each load having assigned priority. The "POWER CONSUMPTION" row indicates the power consumption values of each of the loads L1 to L8. The "CONNECT/SHUT OFF" row indicates whether each of the loads L1 to L8 are connected to or shut off from the trunk line 12. The "SELECTION FLAG" row indicates information on whether or not each of the loads L1 to L8 have been selected in the later described connection load identifying process. And the bottom load management table T2 indicated in Fig. 2, the top load management table T3 indicated in Fig. 3 and the bottom load management table T4 indicated in Fig. 4 are the same as the top load management table T1 in Fig. 2, but are load management tables under different settings or at different time points and therefore each of the values recorded in the load management tables differ.

### (Priority Setting Process)

The power supply control device 1 performs the priority setting process under the control of the CPU 41 of the PC 5. The priority setting process is a process that sets the prioritize/non-prioritize and the priority of the loads L1 to L8 according to the inputs by the user.

As described later, in the load identifying process, the load to be connected to the trunk line 12 is identified so that the power consumed by the loads does not exceed the upper output limit set according to the output capacity of the power source supply device 3. At this time, the loads that have assigned priority (hereinafter called "prioritized loads") and the loads that do not have assigned priority (hereinafter called "non-prioritized loads") among the loads L1 to L8 have different criteria for identifying the loads to be connected to the trunk line 12. Further, in the load identifying process, the prioritized load to be connected to the trunk line 12 is identified taking into consideration the priority assigned to each load. Being the case, the power supply control device 1 performs the priority setting process according to the input of the user to set to the loads L1 to L8 the prioritize, non-prioritize and also assign the priority of the prioritized load in order to be prepared for the execution of the load identifying process.

In the priority setting process, to be specific, the CPU 41 of the PC 5 displays on the information display unit 44 of the PC 5 an input setting screen to input settings to the loads L1 to L8 on the prioritize, non-prioritize and settings on the priorities of the prioritized loads. The user can perform inputs of the settings on prioritize, non-prioritize and the settings on the priorities of the prioritized loads, for each of the loads L1 to L8 by operating the operation input unit 43 of the PC 5 while looking at the input setting screen. The settings of the loads L1 to L8 on the prioritize, the non-prioritize and the priorities of the prioritized loads input by the user are stored in the storage unit 42 as a part of the load management table (see Fig. 2 or 3).

The user can also assign priorities to all of the loads L1 to L8, or can select some loads from the loads L1 to L8 to assign priorities to the selected loads without assigning priorities to the remaining loads. Further, the user may decide not to assign priorities to all loads L1 to L8. Furthermore, the user can change the settings made to the loads L1 to L8 on the prioritize, the non-prioritize settings and the priority settings of the prioritized loads.

### (Power Consumption Calculation Process)

Additionally, the power supply control device 1 performs a power consumption calculation process under the control of the CPU 41 of the PC 5. The power consumption calculation process is a process that calculates the power consumption by the loads L1 to L8 and stores the calculated power consumption results into the storage unit 42, during normal times (during operation of the power system).

The later described load identifying process takes into consideration the power consumption by the loads L1 to L8 to identify the loads to be connected to the trunk line 12. Therefore, the power supply control device 1 performs the power consumption calculation process to calculate the powers consumed by the loads L1 to L8 in order to be prepared for performing the load identifying process.

The power consumption calculation process if performed in, for example, the following way. In other words, the current transformers 31 to 38 continuously measures for each load the currents flowing into the loads L1 to L8 and continuously outputs to the changeover control device 6 the current values measured. Subsequently, the changeover control device 6 outputs to the PC 5 for each load the current values output from the current transformers 31 to 38. Then the PC 5 receives these current values for the CPU 41 of the PC 5 to calculate for each load, the power consumed by the loads L1 to L8 using the current values received. The CPU 41 consecutively calculates the power consumption for each of the loads L1 to L8 and stores at a predetermined time interval (e.g., one second interval) the values of the calculated power consumption in a temporary storage area of the storage unit 42.

The power consumption values of the loads L1 to L8 are stored in the temporary storage area of the storage unit 42. The CPU 41 refers to the power consumption value of the load L1 stored in the temporary storage area of the storage unit 42 at a predetermined time interval, for example, 10 minutes, identifies the maximum power consumption value among the power consumption values of the load L1 stored for the last 10 minutes from that time, stores in a different area of the storage unit 42 as a part of the load management table (see Fig. 2) the identified power consumption value. And immediately thereafter, the CPU 41 deletes all the power consumption values of the load L1 stored in the temporary storage area of the storage unit 42. The CPU 41 performs a similar process on the power consumption values of each of the loads L2 to L8 stored in the temporary storage area of storage unit 42. As a result, the load management table indicated in Fig. 2 has recorded for each load the maximum power consumption value of the loads L1 to L8 of the last 10 minutes. The most current power consumption values recorded in the load management table are used when performing calculations of the power consumption by the loads in the later described load identifying process.

### (Load Identifying Process)

Further, the power supply control device 1 performs a load identifying process under the control of the CPU 41 of the PC 5. The load identifying process is a process which identifies the load to be supplied power from the power source supply device 3 during a power outage. Specifically, the load identifying process is a process which identifies the load to be connected to the trunk line 12 when the power system is shut off from the trunk line 12 due to a power outage and the power source supply device 3 is connected to the trunk line 12.

Firstly, a basic description of the load identifying process will be given with reference to Fig. 2. The top table in Fig. 2 indicates the load management table at the start of the load identifying process in the first example and the bottom table in Fig. 2 indicates the load management table at the end of the load identifying process in the first example.

In the first example, among the loads L1 to L8, loads L1 to L3 are assigned priority by the user performing in advance a setting input and the loads L4 to L8 do not have assigned priority. Therefore, loads L1 to L3 are prioritized loads and the loads L4 to L8 are non-prioritized loads. Additionally, the prioritized loads L1, L2 and L3 are assigned priorities in this order. And the power consumption by the loads L1 to L8 is 500W, 200W, 300W, 300W, 400W, 200W, 100W and 80W, respectively.

In such circumstances, when the load identifying process is started at a power outage, all of the loads L1 to L8 are firstly shut off from the trunk line 12. The top load management table T1 in Fig. 2 indicates the condition of the load management table at this time. Description of the selection flag will be given later in detail.

Subsequently, a prioritized load is selected according to priority, and when the total power consumption by this selected prioritized load and the loads which are identified as the connection targets is not greater than the upper output limit which has been set in advance according to the output capacity of the power source supply device 3, this selected prioritized load is identified as the connection target and the prioritized load is immediately connected to the trunk line 12. Whereas this selected prioritized load is not identified as the connection target when the total power consumption of this selected prioritized load and the loads which are identified as the connection targets is greater than the upper output limit. In this case, this prioritized load is maintained in a state shut off from the trunk line 12. Such processes are repeated in a sequential manner according to priority for all of the prioritized loads. Here, the above described upper output limit is, for example, an appropriate value (e.g., 1200W) which is not greater than the power rating (e.g., 1500W) of the power source supply device 3.

Next, a non-prioritized load is selected in the ascending order of power consumption and a process for identifying the selected non-prioritized load as the connection target is repeatedly performed as long as the total power consumption of this selected non-prioritized load and the loads identified as the connection targets is not greater than the above described upper output limit. And this process ends when all the non-prioritized loads are selected during the above circumstance.

A detailed description of the above two processes are given again as follows using the example indicated in the top table of Fig. 2. Firstly, the prioritized load L1 of the highest priority is selected from the prioritized loads L1 to L3. At the stage where the prioritized load L1 is selected, there is no load which is identified as the connection target so that at this stage, the total power consumption of the selected prioritized load and the loads which are identified as the connection target becomes equal to the power consumption of the prioritized load L1 which is 500W. And this power consumption is not greater than the upper output limit of 1200W so that the prioritized load L1 is identified as the connection target to be immediately connected to the trunk line 12.

Subsequently, the prioritized load L2 of the second highest priority is selected. The load which has been identified as the connection target is the prioritized load L1 at the stage when the prioritized load L2 is selected. And the total power consumption of the prioritized load L2 and the prioritized load L1 is 700W. This power consumption is not greater than 1200W so that the prioritized load L2 is identified as the connection target to be immediately connected to the trunk line 12.

Furthermore, the prioritized load L3 of the third highest priority is subsequently selected. The loads identified as the connection targets at the stage when the prioritized load L3 is selected are the prioritized loads L1 and L2. And the total power consumption of the prioritized load L3 and the prioritized loads L1 and L2 is 1000W. The power consumption is not greater than 1200W so that the prioritized load L3 is identified as the connection target to be immediately connected to the trunk line 12.

Even further still, the non-prioritized load L8 of the smallest power consumption is subsequently selected from the non-prioritized loads L4 to L8. The loads identified as the connection targets at the stage when the non-prioritized load L8 is selected are the prioritized loads L1 to L3. And the total power consumption of the non-prioritized load L8 and the prioritized loads L1 to L3 is 1080W. This power consumption is not greater than 1200W so that the non-prioritized load L8 is identified as the connection target to be immediately connected to the trunk line 12.

Even further sill, the non-prioritized load L7 of the second smallest power consumption is subsequently selected. The loads identified as the connection targets at the stage when the non-prioritized load L7 is selected are the prioritized loads L1 to L3 and the non-prioritized load L8. And the total power consumption of the non-prioritized load L7 and the prioritized loads L1 to L3 together with the non- prioritized load L8 is 1180W. This power consumption is not greater than 1200W so that the non-prioritized load L7 is identified as the connection target to be immediately connected to the trunk line 12.

Even further sill, the non-prioritized load L6 of the third smallest power consumption is subsequently selected. The loads identified as the connection targets at the stage when the non-prioritized load L6 is selected are the prioritized loads L1 to L3 and the non-prioritized loads L7 and L8. And the total power consumption of the non-prioritized load L6 and the prioritized loads L1 to L3 together with the non-prioritized loads L7 and L8 is 1380W. Since this power consumption exceeds 1200W, the prioritized load L6 is not identified as the connection target, and is maintained in a state shut off from the trunk line 12. Then the load identifying process ends. The bottom load management table T2 in Fig. 2 indicates the condition of the load management table at this time.

In this way, according to the load identifying process, since 200W remain to the power source supply device 3 when the loads L1 to L3 which have assigned priority are connected to the trunk line 12 according to priority, the loads L7 and L8 not having assigned priority can be connected within the limit of the power remaining.

The above described conventional technology ends the process without judging whether or not there is a load which can be connected within the limit of the power remaining in the power source device at the time connection of the loads having assigned priority has ended. In contrast, when there exists a load which can be connected within the limit of the power remaining in the power source device 3 even after the time connection of the loads having assigned priority has ended, the power supply control device 1 according to an embodiment of the present invention connects such load. Therefore, according to the power supply control device 1 of the present invention, power supply to the loads at a power outage being limited beyond necessity due to the priority assigned to the loads can be prevented. Further, many loads can be connected since the loads which do not have assigned priority are connected in ascending order of power consumption.

Next, the basic details of the load identifying process will be explained using another specific example. The top table in Fig. 3 indicates the load management table at the start of the load identifying process in the second example and the bottom table in Fig. 3 indicates the load management table at the end of the load identifying process in the second example.

In the second example, the loads L1 to L8 are assigned priority by the user performing in advance a setting input. Therefore, loads L1 to L8 are prioritized loads and there are no non-prioritized loads. Additionally, the prioritized loads L1, L2, L3, L4, L5, L6, L7 and L8 are assigned priorities in this order. And the power consumption by the loads L1 to L8 is the same as that in the first example.

In such circumstances, when the load identifying process is started at a power outage, all of the loads L1 to L8 are firstly shut off from the trunk line 12. The top load management table T3 in Fig. 3 indicates the condition of the load management table at this time.

Subsequently, among the prioritized loads L1 to L8, prioritized loads L1 to L3 are identified in descending order of priority as the connection target to be respectively connected to the trunk line 12. This process is the same as that in the first example.

Furthermore, the prioritized load L4 of the fourth highest priority is subsequently selected. The loads which have been identified as the connection target are the prioritized loads L1 to L3 at the stage when the prioritized load L4 is selected. And the total power consumption of the prioritized load L4 and the prioritized loads L1 to L3 is 1300W. This power consumption exceeds the upper output limit of 1200W so that the prioritized load L4 is not identified as the connection target and is maintained in a state shut off from the trunk line 12.

Yet further still, the prioritized load L5 of the fifth highest priority is subsequently selected, however, similar to the prioritized load L4, the load L5 is not identified as the connection target and is maintained in a state shut off from the trunk line 12. And similarly again, the prioritized load L6 of the sixth highest priority is not identified as the connection target and is maintained in a state shut off from the trunk line 12.

Even further still, the prioritized load L7 of the seventh highest priority is subsequently selected. The loads which have been identified as the connection target are the prioritized loads L1 to L3 at the stage when the prioritized load L7 is selected. And the total power consumption of the prioritized load L7 and the prioritized loads L1 to L3 is 1100W. This power consumption is not greater than 1200W so that the prioritized load L7 is identified as the connection target to be immediately connected to the trunk line 12.

Even further still, the prioritized load L8 of the eighth highest priority is subsequently selected. The loads which have been identified as the connection target are the prioritized loads L1 to L3 and L7 at the stage when the prioritized load L8 is selected. And the total power consumption of the prioritized load L8 together with the prioritized loads L1 to L3 and L7 is 1180W. This power consumption is not greater than 1200W so that the prioritized load L8 is identified as the connection target to be immediately connected to the trunk line 12. And the load identifying process ends here since there is no non-prioritized load in the second example. The bottom load management table T4 in Fig. 3 indicates the condition of the load management table at this time.

And in to the load identifying process as above, the loads L1 to L3 are identified according to priority, and subsequently attempts are made to identify the next load L4 according to priority, however, since the total power consumption by the loads L1 to L4 exceeds the upper output limit when the load L4 is identified, the load L4 is not identified but is skipped and an attempt is made to identify a load of a lower priority. Hereby, the loads L7 and L8 in addition to the loads L1 to L3 are identified for them to be connected. Therefore, more loads can be connected by the load identifying process compared to when the loads are simply connected according to priority.

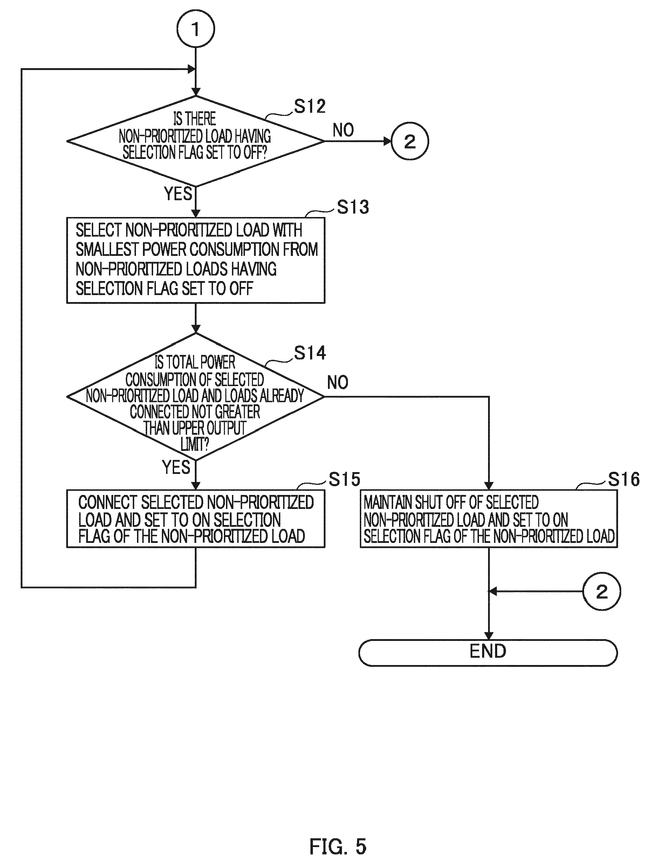

Next, a detailed description of examples on how the load identifying process is performed will be given. Figs. 4 and 5 are flowcharts illustrating the specific flow of the load identifying process. In Fig. 4, when the power supply from the power system 2 stops due to a power outage (Step S1: YES), the power source breaker 14 detects such event to open automatically and shuts off the line between the power system 2 and the trunk line 12 (Step S2).

When the power source breaker 14 is opened, a trip signal is outputted from the power source breaker 14 to the changeover control device 6 and a notification signal is outputted from the changeover control device 6 to the PC 5 according to the trip signal. The PC 5 recognizes that the power system 2 has stopped based on this notification signal. Subsequently, the PC 5 outputs to the changeover control device 6 a command signal instructing to open all the load switches 21 to 28. A control signal is outputted from the changeover control device 6 to each load switch 21 according to the command signal, and the load switches 21 to 28 are opened according to this control signal so that all the loads L1 to L8 are shut off from the trunk line 12. Further subsequently, the CPU 41 of the PC 5 sets to OFF the respective selection flags of all the loads L1 to L8 (Step S3).

Subsequently, when the user turns on the on-off switch 16 to start the power supply from the power source supply device 3, the changeover control device 6 detects such event and outputs a detection signal to the PC 5, then the CPU 41 of the PC 5 recognizes that the on-off switch 16 has been turned on based on this detection signal (Step S4: YES). Then the CPU 41 judges whether the total power consumption of all the loads L1 to L8 is not greater than the above described upper output limit (Step S5). And when the total power consumption of all the loads L1 to L8 is not greater than the upper power limit (Step S5: YES), the CPU 41 outputs to the changeover control device 6 a command signal instructing to close all the load switches 21 to 28. In response to this command signal, a control signal is outputted from the changeover control device 6 to the respective load switches 21 to 28 and the load switches 21 to 28 are closed according to this control signal for all the loads L1 to L8 to be connected to the trunk line 12. Then the CPU 41 sets to ON the respective selection flags of all the loads L1 to L8 (Step S6) and ends the load identifying process.

On the other hand, when the total power consumption of all the loads L1 to L8 is greater than the upper output limit (Step S5: NO), the CPU 41 judges whether or not there is a prioritized load which has the selection set to OFF (Step S7). And when there is a prioritized load which has the selection flag set to OFF (Step S7: YES), the CPU 41 selects the prioritized load with the highest priority from the prioritized loads with their selection flags set to OFF (Step S8).

Subsequently, the CPU 41 judges whether or not the total power consumption of the prioritized load selected at Step S8 and the loads connected to the trunk line 12 by having the load switches already closed at this time is not greater than the upper output limit (Step S9). Then when the total power consumption of the prioritized load selected at Step S8 and the load connected to the trunk line 12 by having the load switches already closed at this time is not greater than the upper output limit (Step S9: YES), the CPU 41 outputs to the changeover control device 6 a command signal instructing to close the load switches corresponding to the prioritized load selected at Step S8. Then a control signal is outputted from the changeover control device 6 to this load switch in response to this command signal. Hereby, the load switch corresponding to the prioritized load selected at Step S8 is closed and the prioritized load selected at Step S8 is connected to the trunk line 12. Then the CPU 41 sets to ON the selection flag of the prioritized load selected at Step S8 (Step 10) and returns the process to Step S7.

On the other hand, when the total power consumption of the prioritized load selected at Step S8 and the loads connected to the trunk line 12 by having the load switches already closed at this time is greater than the upper output limit (Step S9: NO), the CPU 41 sets to OFF the selection flag of the prioritized load selected at Step S8 (Step 10), and returns the process to Step S7. As a result, the prioritized load selected at Step S8 is maintained in a state shut off from the trunk line 12.

Meanwhile at Step S7, when there is no prioritized load having the selection flag set to OFF (Step S7: NO), the CPU 41 judges whether or not there is a non-prioritized load having the selection flag set to OFF (Step 12), as shown in Fig. 5. And when there is a non-prioritized load having the selection flag set to OFF (Step S12: YES), the CPU 41 selects the non-prioritized load with the smallest power consumption from the non-prioritized loads having the selection flags set to OFF (Step S13).

Subsequently, the CPU 41 judges whether or not the total power consumption of the non-prioritized load selected at Step 13 and the loads connected to the trunk line 12 by having the load switches already closed at this time is not greater than the upper output limit (Step S14). And when the total power consumption of the non-prioritized load selected at Step S13 and the loads connected to the trunk line 12 by having the load switches already closed at this time is not greater than the upper output limit (Step S14: YES), the CPU 41 outputs to the changeover control device 6 a command signal instructing to close the load switch corresponding to the non-prioritized load selected at Step 13. Then a control signal is outputted from the changeover control device 6 to the load switch in response to this command signal. Hereby, the load switch corresponding to the non-prioritized load selected at Step 13 is closed and the non-prioritized load selected at Step 13 is connected to the trunk line 12. Then the CPU 41 sets to ON the selection flag of the non-prioritized load selected at Step 13 (Step S15) and returns the process to S12.

On the other hand, when the total power consumption of the non-prioritized load selected at Step 13 and the loads connect to the trunk line 12 by having the load switches already closed at this time is greater than the upper output limit (Step S14: NO), the CPU 41 sets to ON the selection flag of the non-prioritized load selected at Step 13 (Step 16) and ends the load identifying process. As a result, the non-prioritized load selected at Step S13 is maintained in a state shut off from the trunk line 12. Further, the non-prioritized load which was not selected in this load identifying process is also maintained in a state shut off from the trunk line 12.

Meanwhile, in Step S12, the load identifying process ends when there is no non-prioritized load having the selection flag set to OFF (Step S12: NO). Here, the Steps S7 to S11 in Fig. 4 are specific examples of the prioritized load identifying process and the Steps S12 to S16 in Fig. 5 are specific examples of the non-prioritized load identifying process.

As described above, according to the power supply control device 1 of the present invention, power supply to the loads L1 to L8 at a power outage can be prevented from being limited beyond necessity due to the priority assigned to the loads. Further, according to the power supply control device 1, the actual power consumption by the loads L1 to L8 is acquired with the current transformers 31 to 38 and then stored, so that at a power outage, the actual power consumption of these loads L1 to L8 acquired immediately before the power outage is used to judge whether or not connection to the trunk line 12 is to be performed for the loads L1 to L8. Therefore, the loads available for connection can be certainly connected according to the specific circumstances immediately before the power outage thereby realizing a flexible and a highly accurate power supply control according to various circumstances. Further, according to the power supply control device 1, a power outage and an on state of the on-off switch 16 for connecting the power source supply device 3 to the trunk line 12 can be recognized and according to such, the load identifying process is automatically performed to connect the connectable loads to the trunk line 12. Therefore, a user can continue using the loads centering on the load with high priority without performing a complicated operation after a power outage occurs.

In the aforementioned embodiment, an example of the power source device was given using the power source supply device 3 which takes out power stored in the rechargeable battery 9 of an electric vehicle 8 to supply to the switchboard 4 side, however, the present invention is not limited to such. For example, the rechargeable battery or the power generator and the like can be used as the power source device.

Further in the aforementioned embodiment, as the criteria for judging the loads connectable to the trunk line 12, the upper output limit set according to the output capacity of the power source supply device 3 was used and this upper output limit was set to a value smaller than the power rating of the power source supply device 3. This is to keep the total power consumption of the connected loads from immediately exceeding the power rating of the power source supply device 3 even when the power consumption by the loads should increase during the operation of the loads by the power from the power source supply device 3. However, the upper output limit can be set to a value equal to the power rating of the power source supply device 3. Further, for example, when a rechargeable battery is used as the power source device, the upper output limit may be made to change according to the amount of power remaining in the rechargeable battery.

Further in the load identifying process in the aforementioned embodiment, examples were given where the loads were immediately connected to the trunk line 12 each time the loads were identified as the connection target, however, the present invention is not limited to such. For example, all the identified loads may be connected to the trunk line 12 after completing identification of all the loads to be connected to the trunk line 12.

Furthermore, examples of performing the load identifying process at a power outage was given in the aforementioned embodiment, however, the present invention is not limited to such. The load identifying process may be performed when the power system is stopped for reasons besides a power outage.

Even further, the present invention can be appropriately changed within the spirit and scope of the invention which can be understood from the claims and the entire specification, and a power supply control device to which such changes are made is also within the technical principles of the present invention.

### [Reference Signs List]

- 1: power supply control device
- 2: power system
- 3: power source supply device (power source device)
- 4: switchboard
- 5: personal computer (changeover control unit)
- 6: changeover control device (changeover control unit)
- 7: external circuit breaker
- 11: electric circuit (circuit)
- 12: trunk line
- 13: branch circuit unit
- 14: power source breaker (power source changeover unit)
- 15: current transformer
- 16: on-off switch (power source changeover unit))
- 21-28: load switch (switch)
- 31-38: current transformer (measuring unit)
- 41: CPU (priority setting unit, load identifying unit, prioritized load identifying unit, non-prioritized load identifying unit)
- 42: storage unit
- L1-L8: load

## Claims

1. A power supply control device that controls power supply from a power source device to a plurality of loads comprising:
a circuit configured to parallely connect the plurality of loads to the power source device;
a plurality of switches provided to the circuit, the switches being configured to respectively switch between a connection and a shut off between the power source device and the plurality of loads;
a priority setting unit configured to assign priorities to the plurality of loads;
a load identifying unit configured to repeatedly perform a load identifying process on all of the plurality of loads, the load identifying process selecting one load from the plurality of loads according to the priority, identifying the selected load as a connection target when a total power consumption by the selected load and a load that is already identified as a connection target is not greater than an upper output limit that is set according to an output capacity of the power source device, and does not identify the selected load as the connection target when the total power consumption by the selected load and the load that is already identified as the connection target is greater than the upper output limit; and
a changeover control unit configured to control a changeover of the switch corresponding to the load that is identified as the connection target by the load identifying unit and to connect to the power source device the load that is identified as the connection target.

2. The power supply control device according to claim 1, further comprising
a measuring unit configured to measure the power consumption by the loads and
a storage unit configured to store measurements, of the power consumption by the loads, measured by the measuring unit wherein
the load identifying unit calculates the total power consumption using the measurements, of the power consumption by the loads, measured by the measuring unit and stored in the storage unit.

3. The power supply control device according to claim 1 or 2, further comprising a power source changeover unit configured to switch between connecting the loads to a power system and connecting the loads to the power source device and
the load identifying unit performs the load identifying process when the loads are shut off from the power system and are connected to the power source device by the power source changeover unit.

4. A power supply control device that controls power supply from a power source device to a plurality of loads comprising:
a circuit configured to parallely connect the plurality of loads to the power source device;
a plurality of switches provided to the circuit, the switches being configured to respectively switch between a connection and a shut off between the power source device and the plurality of loads;
a priority setting unit configured to set as prioritized loads to a number of loads of the plurality of loads, set as non-prioritized loads to a remainder of the plurality of loads and assign priorities to only the prioritized loads;
a prioritized load identifying unit configured to repeatedly perform a prioritized load identifying process on all prioritized loads, the prioritized load identifying process selecting one prioritized load according to the priority, identifying the selected prioritized load as a connection target when a total power consumption by the selected prioritized load and a prioritized load that is already identified as a connection target is not greater than an upper output limit that is set according to an output capacity of the power source device, and does not identify the selected prioritized load as the connection target when the total power consumption by the selected prioritized load and the prioritized load that is already identified as the connection target is greater than the upper output limit;
a non-prioritized load identifying unit configured to repeatedly perform a non-prioritized load identifying process as long as the total power consumption of the selected non-prioritized load and the load that is already identified as the connection target is not greater than the upper output limit, after performing by the prioritized load identifying unit the prioritized load identifying process on all the prioritized loads, the non-prioritized load identifying process selecting one non-prioritized load in ascending order of power consumption and identifying the selected non-prioritized load as the connection target; and
a changeover control unit configured to control a changeover of the switch corresponding to the loads that are identified as the connection targets by the prioritized load identifying unit and the non-prioritized load identifying unit, and to connect to the power source device the loads that are identified as the connection targets.

5. The power supply control device according to claim 4, further comprising
a measuring unit configured to measure the power consumption by the loads and
a storage unit configured to store measurements, of the power consumption by the loads, measured by the measuring unit wherein
the prioritized load identifying unit and the non-prioritized load identifying unit calculate the total power consumption using the measurements, of the power consumption by the loads, measured by the measuring unit and stored in the storage unit.

6. The power supply control device according to claim 4 or 5, further comprising a power source changeover unit configured to switch between connecting the loads to a power system and connecting the loads to the power source device and
the prioritized load identifying unit and the non-prioritized load identifying unit perform the prioritized load identifying process and the non-prioritized load identifying process when the loads are shut off from the power system and are connected to the power source device by the power source changeover unit.
